# EUROPÄISCHE PATENTANMELDUNG

(11) **EP 4 331 873 A1**
(43) Veröffentlichungstag der Anmeldung: **06.03.2024**
(21) Anmeldenummer: 22193618.0
(22) Anmeldetag: 02.09.2022
(51) Int. Cl.: B60D 1/167

(54) **ANHÄNGER**

(71) Anmelder: EPSILON Kran GmbH., 5020 Salzburg (AT)
(72) Erfinder: ROHRMOSER, Florian, 5611 Grossarl (AT); HETZ, Johannes, 5431 Kuchl (AT)
(74) Vertreter: Torggler & Hofmann Patentanwälte - Innsbruck

(57) **Zusammenfassung**

Anhänger (1) mit einem Fahrzeugrahmen (2) und einer schwenkbar an dem Fahrzeugrahmen (2) gelagerten Zuggabel (3), mit einer Rückhaltevorrichtung (9) für die Zuggabel (3), wobei mit der Rückhaltevorrichtung (9) zumindest eine Schwenkstellung der Zuggabel (3) relativ zum Fahrzeugrahmen (2) einstellbar ist, wobei die Rückhaltevorrichtung (9)
- zumindest eine Federvorrichtung (10) mit einem ersten Ende (11) und einem zweiten Ende (12) aufweist, wobei die Federvorrichtung (10) mit dem ersten Ende (11) mit dem Fahrzeugrahmen (2) verbindbar oder verbunden ist, und
- eine an der Zuggabel (3) angeordnete Einstellvorrichtung (13) mit zumindest einem Anschlagpunkt (14) aufweist, wobei die Federvorrichtung (10) mit dem zweiten Ende (12) mit dem zumindest einen Anschlagpunkt (14) verbindbar oder verbunden ist, wobei eine Position des zumindest einen Anschlagpunkts (14) relativ zur Zuggabel (3) verstellbar ist
wobei die Position des zumindest einen Anschlagpunkts (14) relativ zur Zuggabel (3) mit der Einstellvorrichtung (13) unabhängig von der Schwenkstellung der Zuggabel (3) relativ zum Fahrzeugrahmen (2) einstellbar und festlegbar ist.

## Beschreibung

Die vorliegende Erfindung betrifft einen Anhänger mit einem Fahrzeugrahmen und einer schwenkbar an dem Fahrzeugrahmen gelagerten Zuggabel gemäß dem Oberbegriff des Anspruchs 1.

Im Stand der Technik sind Anhänger mit schwenkbar gelagerten Zuggabeln bekannt, welche eine Rückhaltevorrichtung zur Vermeidung eines ungewollten Absenkens der Zuggabel aufweisen. Auch sind Rückhaltevorrichtungen bekannt, mit welchen eine Höhe einer Zugöse der Zuggabel gegenüber dem zum Abstellen oder Befahren des Anhängers genutzten Boden einstellbar ist. Im Stand der Technik bekannte Ausführungen können beispielsweise eine zwischen einem Fahrzeugrahmen des Anhängers und der Zuggabel angeordnete Feder aufweisen, welche an unterschiedlichen Positionen an der Zuggabel angeschlagen werden kann. Abhängig von der jeweils verwendeten Zuggabel und den verfügbaren Anschlagpositionen müssen nachteilig die Federn speziell an das Lastmoment der Zuggabel angepasst werden, man benötigt somit nachteilig für jede unterschiedliche Zuggabel eine eigene Feder mit einer entsprechend angepassten Federkonstante.

Aufgabe der Erfindung ist es, einen gegenüber dem Stand der Technik verbesserten Anhänger mit einem Fahrzeugrahmen und einer schwenkbar an dem Fahrzeugrahmen gelagerten Zuggabel anzugeben, welcher die oben genannten Nachteile nicht aufweist.

Die Aufgabe wird von einem Anhänger mit einem Fahrzeugrahmen und einer schwenkbar an dem Fahrzeugrahmen gelagerten Zuggabel gemäß Anspruch 1 gelöst.

Vorteilhafte Ausführungen sind in den abhängigen Ansprüchen definiert.

Der Anhänger kann in Form eines einachsigen oder mehrachsigen Fahrzeugs mit einem Fahrwerk zum Befahren eines Bodens oder einer Fahrbahn ausgebildet sein.

Der Anhänger weist einen Fahrzeugrahmen auf, an welchem beispielsweise ein Fahrwerk und eine Lagervorrichtung für einen Fahrzeugaufbau angeordnet sein kann. Der Anhänger kann beispielsweise als ein Drehgestell für einen Trailer oder als eigenständiger Anhänger ausgebildet sein.

Weiters weist der Anhänger eine an dem Fahrzeugrahmen schwenkbar gelagerte Zuggabel auf, mit welcher der Anhänger an ein Zugfahrzeug ankoppelbar sein kann. Die Zuggabel kann an einem freien Ende einen Anschlagpunkt beispielsweise in Form einer Zugöse zur Ankopplung an ein Trägerfahrzeug aufweisen.

An einem dem Fahrzeugrahmen zugewandten Ende der Zuggabel kann die Zuggabel um eine in Montagelage horizontal verlaufende Schwenkachse schwenkbar am Fahrzeugrahmen gelagert sein. Durch die schwenkbare Lagerung der Zuggabel am Fahrzeugrahmen kann ein freies Ende der Zuggabel gegenüber dem zum Abstellen oder Befahren des Anhängers genutzten Boden angehoben oder abgesenkt werden.

Durch die schwenkbare Lagerung der Zuggabel am Fahrzeugrahmen kann die Höhe eines freien Endes der Zuggabel gegenüber dem Boden veränderbar sein, beispielsweise zur Anpassung einer Zugöse an die jeweilige Höhe eines Kupplungsmauls eines Zugfahrzeuges.

Der Anhänger weist eine Rückhaltevorrichtung für die Zuggabel auf, wobei mit der Rückhaltevorrichtung zumindest eine Schwenkstellung der Zuggabel relativ zum Fahrzeugrahmen einstellbar ist. Es soll nicht ausgeschlossen sein, dass mit der Rückhaltevorrichtung mehrere oder beliebige Schwenkstellungen der Zuggabel relativ zum Fahrzeugrahmen einstellbar sind. Die Rückhaltevorrichtung kann ein ungewolltes Absenken der Zuggabel aufgrund des Lastmoments der Zuggabel verhindern.

Die Rückhaltevorrichtung weist zumindest eine Federvorrichtung mit einem ersten Ende und einem zweiten Ende auf. Mit der Federvorrichtung kann grundsätzlich ein Lastmoment der Zuggabel kompensierbar sein.

Mit der Federvorrichtung der Rückhaltevorrichtung kann die Zuggabel in zumindest einer Schwenkstellung relativ zum Fahrzeugrahmen einstellbar sein, wobei eine Verschwenkbarkeit der Zuggabel relativ zum Fahrzeugrahmen innerhalb eines vorgegebenen oder vorgebbaren Bereichs, beispielsweise durch Auswahl einer Federkonstante der Feder oder Federn, durch die Federvorrichtung gegeben sein kann.

Die Federvorrichtung kann mit dem ersten Ende mit dem Fahrzeugrahmen, insbesondere mit einem Anschlagpunkt am Fahrzeugrahmen, verbindbar oder verbunden sein und mit einem zweiten Ende mit einem an der Zuggabel angeordneten Anschlagpunkt verbindbar oder verbunden sein. Eine Verbindung der Federvorrichtung mit dem ersten Ende mit dem Fahrzeugrahmen kann an einem relativ zum Fahrzeugrahmen feststehenden und im oder am Fahrzeugrahmen ausgebildeten Anschlagpunkt erfolgen.

Die Rückhaltevorrichtung weist weiter eine an der Zuggabel angeordnete Einstellvorrichtung mit zumindest einem Anschlagpunkt für die Federvorrichtung auf, wobei die Federvorrichtung mit dem zweiten Ende mit dem zumindest einen Anschlagpunkt verbindbar oder verbunden ist.

Die Federvorrichtung kann eine einzelne oder mehrere parallel und/oder seriell wirkende Federn aufweisen, wobei die Feder als schraubenförmige Zugfedern und/oder Gasfedern ausgeführt sein können. Am Fahrzeugrahmen und/oder an der Einstellvorrichtung können eine entsprechende Anzahl von Anschlagpunkten vorgesehen sein.

Eine Position des zumindest einen Anschlagpunkts relativ zur Zuggabel ist mit der Einstellvorrichtung verstellbar. Durch eine Verstellung der Position des an der Zuggabel angeordneten Anschlagpunkts relativ zur Zuggabel kann eine Schwenkstellung der Zuggabel relativ zum Fahrzeugrahmen einstellbar sein.

Bei einer Verstellung der Position des an der Zuggabel angeordneten Anschlagpunkts relativ zur Zuggabel kann ein Abstand des an der Zuggabel angeordneten Anschlagpunkts zu einem Anschlagpunkt für die Federvorrichtung am Fahrzeugrahmen verstellbar sein.

Es ist vorgesehen, dass die Position des zumindest einen Anschlagpunkts relativ zur Zuggabel mit der Einstellvorrichtung unabhängig von der Schwenkstellung der Zuggabel relativ zum Fahrzeugrahmen einstellbar und festlegbar ist.

Mit der Einstellvorrichtung kann ein Abstand des zumindest einen verstellbar an der Zuggabel angeordneten Anschlagpunkts zur Schwenkachse der schwenkbar am Fahrzeugrahmen gelagerten Zuggabel verstellbar sein. Damit kann eine an das Lastmoment einer Zuggabel angepasste Federvorspannung der Federvorrichtung einstellbar sein, wodurch eine Schwenkstellung der Zuggabel relativ zum Fahrzeugrahmen einstellbar ist.

Bei einer Schwenkbewegung der Zuggabel relativ zum Fahrzeugrahmen kann die eingestellte Position des zumindest einen Anschlagpunkts relativ zur Zuggabel erhalten bleiben.

Insbesondere kann ein eingestellter Abstand des zumindest einen verstellbar an der Zuggabel angeordneten Anschlagpunkts zur Schwenkachse der schwenkbar am Fahrzeugrahmen gelagerten Zuggabel bei einer Schwenkbewegung der Zuggabel relativ zum Fahrzeugrahmen unverändert bleiben.

Durch Unebenheiten des vom Anhänger befahrenen Bodens können Schwenkbewegungen der Zuggabel relativ zum Fahrzeug, an welchem die Zuggabel ankoppelbar ist, auftreten, beispielsweise durch einen variierenden Höhenunterschied zwischen dem Zugfahrzeug und dem Anhänger. Da die eingestellte Position des zumindest einen Anschlagpunkts relativ zur Zuggabel durch die Festlegung an der Zuggabel erhalten bleibt, tritt keine Bewegung von Teilen der Einstellvorrichtung auf, womit diese im Wesentlichen verschleißfrei und geräuscharm ausführbar ist.

Der zumindest eine Anschlagpunkt kann an einem relativ zur Zuggabel verschwenkbaren Hebel und/oder einem relativ zur Zuggabel verfahrbaren Schlitten der Einstellvorrichtung ausgebildet sein.

Ist die Federvorrichtung mit parallel wirkenden Federn ausgeführt, kann die Einstellvorrichtung eine entsprechende Anzahl von Hebeln und/oder Schlitten aufweisen. Die Hebel und/oder Schlitten können gemeinsam einstellbar und festlegbar sein.

Der Hebel kann um ein an der Zuggabel angeordnetes Schwenklager schwenkbar sein. Insbesondere kann eine Schwenkachse des Hebels im Wesentlichen parallel zur Schwenkachse der schwenkbaren Lagerung der Zuggabel am Fahrzeugrahmen gelegen sein.

Der Schlitten kann linear entlang der Zuggabel verfahrbar ausgebildet sein. Insbesondere kann der Schlitten entlang einer Längsachse des Fahrzeugs und der Zuggabel verfahrbar sein.

Es ist für eine Kombination des Hebels und des Schlittens denkbar, dass die Schwenkachse des Hebels an einem linear entlang der Zuggabel verfahrbaren Schlitten ausgebildet ist.

Der Hebel und/oder der Schlitten kann dabei in der jeweiligen Position relativ zur Zuggabel einstellbar und festlegbar sein.

In einer Ausführung, in welcher der zumindest eine Anschlagpunkt an einem relativ zur Zuggabel verschwenkbaren Hebel ausgebildet ist, kann mit der Einstellvorrichtung eine Schwenkstellung des verschwenkbaren Hebels relativ zur Zuggabel einstellbar und festlegbar sein.

Mit der Einstellvorrichtung kann dabei eine Schwenkstellung des verschwenkbaren Hebels durch eine formschlüssige und/oder kraftschlüssige Verbindung zwischen dem Hebel und zumindest einem an der Zuggabel ausgebildeten Anschlag einstellbar und festlegbar sein.

Eine formschlüssige Verbindung kann beispielsweise durch
- eine am Hebel ausgebildete Verzahnung, welche in einen Anschlag mit entsprechender Verzahnung eingreift, und/oder
- eine Verbolzung oder Verschraubung einer Öffnung des Hebels mit einer als Anschlag dienenden Öffnung in oder an der Zuggabel, und/oder
- eine profilierte Öffnung im Hebel, beispielsweise eine Sechskant- oder auch Zwölfkant-Aufnahme, in welche ein entsprechend profilierter, an der Zuggabel angeordneter Anschlag, beispielsweise ein Sechskant-Bolzen, eingreift,
ausgebildet sein.

Eine kraftschlüssige Verbindung kann beispielsweise durch
- eine Verschraubung des Hebels an einer als Anschlag dienenden Öffnung in oder an der Zuggabel zum Festklemmen der Schwenkstellung des Hebels, und/oder
- ein selbsthemmendes Spannelement, beispielsweise ein Spannschloss, zur Festlegung einer Schwenkstellung des Hebels an der Zuggabel
ausgebildet sein.

In einer Ausführung, in welcher der zumindest eine Anschlagpunkt an einem relativ zur Zuggabel verfahrbaren Schlitten ausgebildet ist, kann mit der Einstellvorrichtung eine Position des verfahrbaren Schlittens entlang der Zuggabel einstellbar und festlegbar sein.

Eine formschlüssige Verbindung kann beispielsweise durch
- eine am Schlitten ausgebildete Verzahnung, welche in einen Anschlag mit entsprechender Verzahnung eingreift, und/oder
- eine Verbolzung oder Verschraubung einer Öffnung des Schlittens mit einer als Anschlag dienenden Öffnung in oder an der Zuggabel, und/oder
ausgebildet sein.

Eine kraftschlüssige Verbindung kann beispielsweise durch
- eine Verschraubung des Schlittens an einer als Anschlag dienenden Öffnung in oder an der Zuggabel zum Festklemmen des Schlittens, und/oder
- eine Festlegung des Schlittens an der Zuggabel durch ein selbsthemmendes Spannelement, beispielsweise ein Spannschloss,
ausgebildet sein.

Die mit der Einstellvorrichtung vornehmbaren Einstellungen können über den verfügbaren Verstellbereich allgemein zumindest teilweise diskret oder kontinuierlich sein.

Der zumindest eine an der Zuggabel ausgebildete oder angeordnete Anschlag kann in seiner Position relativ zur Zuggabel verstellbar ausgebildet sein. Dabei kann beispielsweise eine Stellkontur des Hebels oder des Schlittens mit einer an der Zuggabel angeordneten Stellschraube zusammenwirken.

Vorteilhaft kann in Montagelage der Zuggabel die Einstellvorrichtung im Wesentlichen vollständig unterhalb der Zuggabel angeordnet sein. Eine an einem Anhänger angeordnete Zuggabel kann in Montagelage eine dem Boden zugewandte Unterseite aufweisen, wobei die Einstellvorrichtung vor äußeren Einwirkungen geschützt im Wesentlichen vollständig an der Unterseite unterhalb der Zuggabel, insbesondere unterhalb einer Oberseite der Zuggabel, angeordnet sein kann.

In Montagelage der Zuggabel kann das erste Ende der Federvorrichtung oberhalb der Zuggabel mit dem Fahrzeugrahmen verbindbar oder verbunden sein und das zweite Ende der Federvorrichtung unterhalb der Zuggabel mit zumindest einem Anschlagpunkt der Einstellvorrichtung verbindbar oder verbunden sein. Insbesondere bei einer im Wesentlichen vollständig an der Unterseite unterhalb der Zuggabel angeordneten Einstellvorrichtung kann sich eine vorteilhafte Position der Federvorrichtung ergeben. Die Federvorrichtung kann dabei von einer Oberseite der Zuggabel zu einer Unterseite der Zuggabel verlaufen.

Die Zuggabel kann vorteilhaft in A-Form, V-Form oder in Y-Form mit zumindest zwei in Richtung des Fahrzeugrahmens auseinanderlaufenden Schenkeln ausgebildet sein. Zwischen den in Richtung des Fahrzeugrahmens auseinanderlaufenden Schenkeln kann eine Querstrebe angeordnet sein, wobei die Einstellvorrichtung im Wesentlichen vollständig unterhalb der Zuggabel und insbesondere an einer Unterseite der Querstrebe angeordnet sein kann.

Ausführungsbeispiele der Erfindung werden anhand der Figuren diskutiert. Es zeigen:
Fig. 1a und 1b perspektivische Ansichten einer Ausführung eines Anhängers mit einer Zuggabel
Fig. 2 eine Seitenansicht einer weiteren Ausführung eines Anhängers mit einer Zuggabel
Fig. 3a bis 3c verschiedene Ansichten einer Zuggabel mit einer Rückhaltevorrichtung
Fig. 4a und 4b Detailansichten einer Zuggabel in unterschiedlichen Schwenkstellungen
Fig. 5a bis 5d Seitenansichten einer Zuggabel mit unterschiedlichen Ausführungen einer Einstellvorrichtung
Fig. 6a bis 6d Seitenansichten einer Zuggabel mit unterschiedlichen Ausführungen einer Einstellvorrichtung

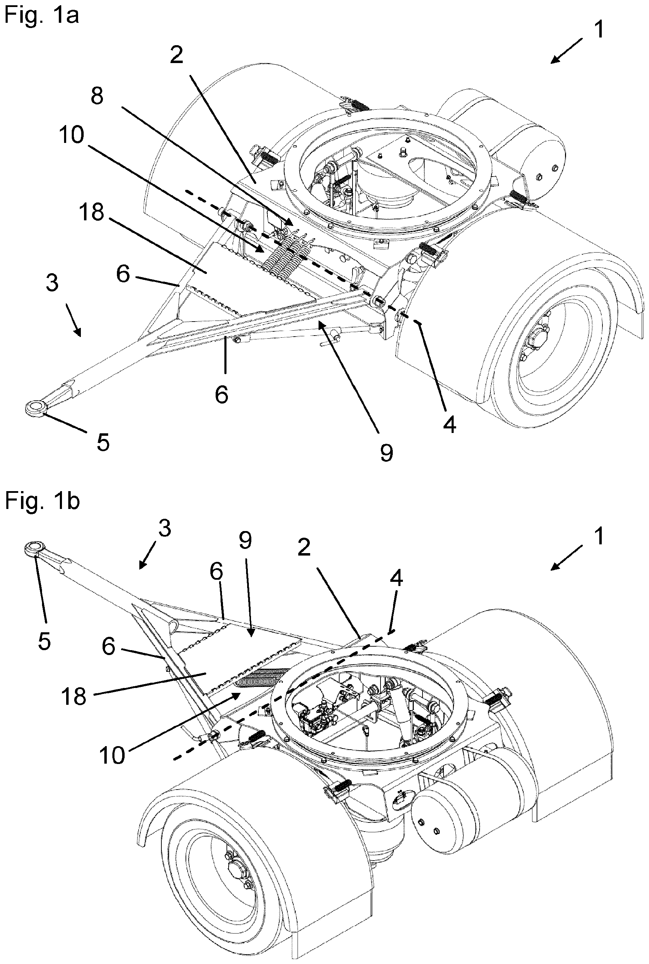

Figur 1a und 1b zeigen verschiedene Ansichten eines als Drehgestell ausgeführten Anhänger 1 mit einem Fahrzeugrahmen 2 und einer um eine im Wesentlichen horizontal gelegene Schwenkachse 4 schwenkbar an dem Fahrzeugrahmen 2 gelagerten Zuggabel 3.

In den gezeigten Figuren ist die Zuggabel 3 in Y-Form mit zwei in Richtung des Fahrzeugrahmens 2 auseinanderlaufenden Schenkeln 6 ausgebildet, wobei zwischen den Schenkeln 6 eine Querstrebe 7 verdeckt unterhalb des dargestellten Auftrittblechs 18 angeordnet ist. Die Zuggabel 3 weist an einem freien Ende einen Anschlagpunkt in Form einer Zugöse 5 zur Ankopplung an ein Zugfahrzeug auf.

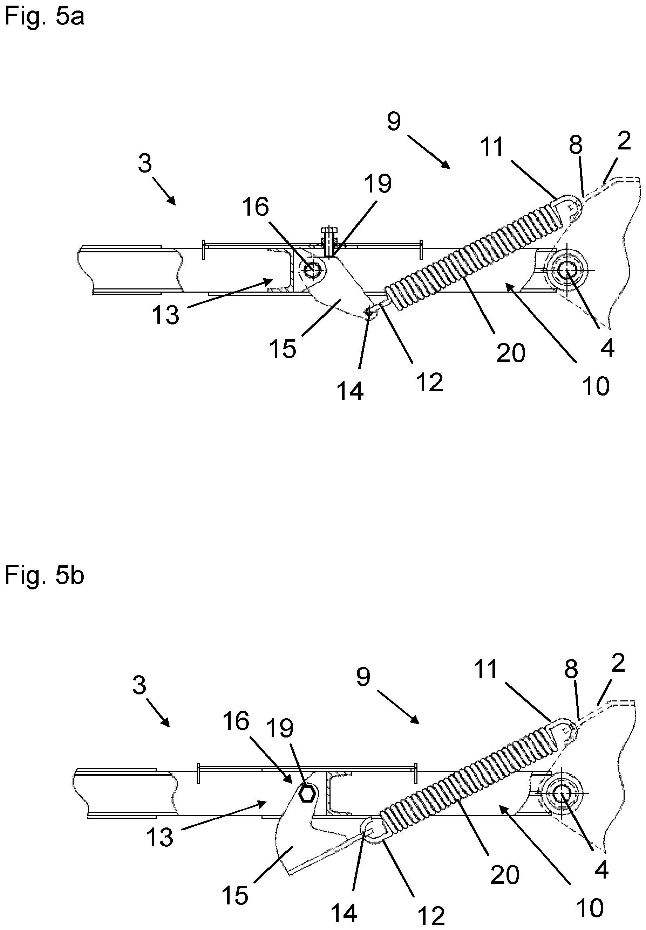

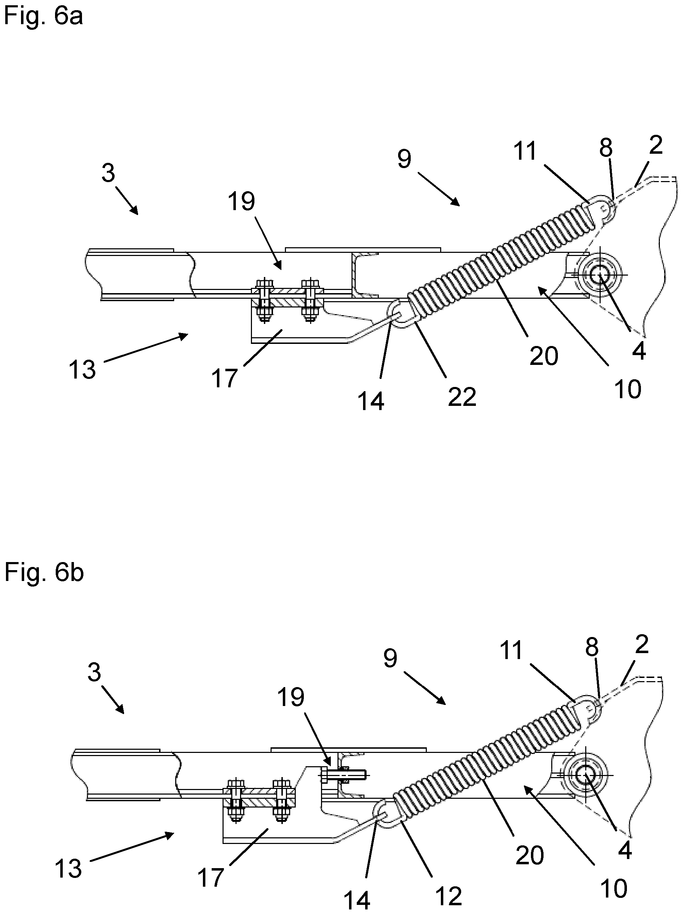

Die Zuggabel 3 kann mit einer Rückhaltevorrichtung 9 in zumindest einer Schwenkstellung relativ zum Fahrzeugrahmen 2 einstellbar sein. In den Figuren 1a und 1b ist eine an Anschlagpunkten 8 im Fahrzeugrahmen 2 angeschlagene Federvorrichtung 10 der Rückhaltevorrichtung 9 erkennbar. Nähere Details dazu sind etwa den Figuren 5a bis 5d und 6a bis 6d entnehmbar.

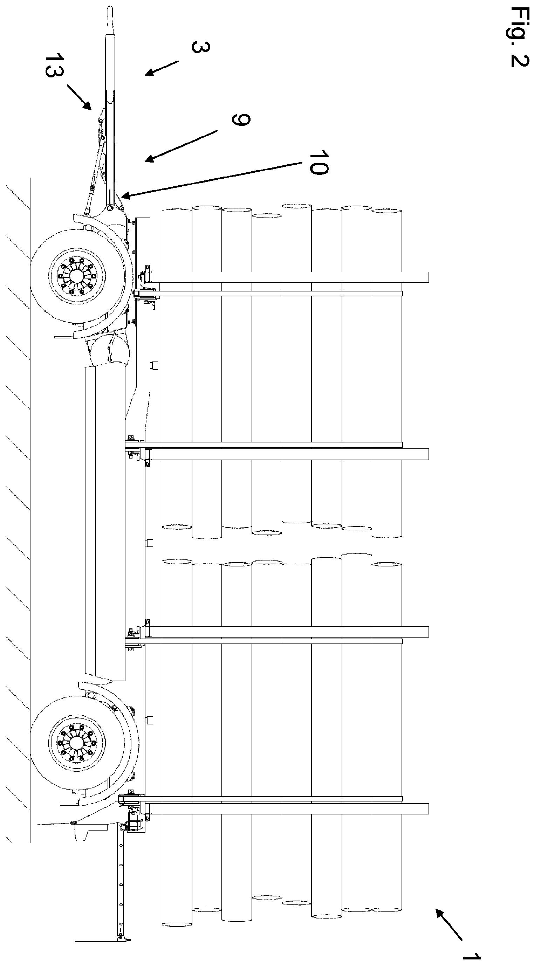

In Figur 2 ist ein als Holzanhänger mit einem Rungenaufbau ausgeführter Anhänger 1 mit einer Zuggabel 3 gezeigt, wobei eine Federvorrichtung 10 und eine im Wesentlichen vollständig an einer Unterseite der Zuggabel 3 angeordnete Einstellvorrichtung 13 der Rückhaltevorrichtung 9 erkennbar ist.

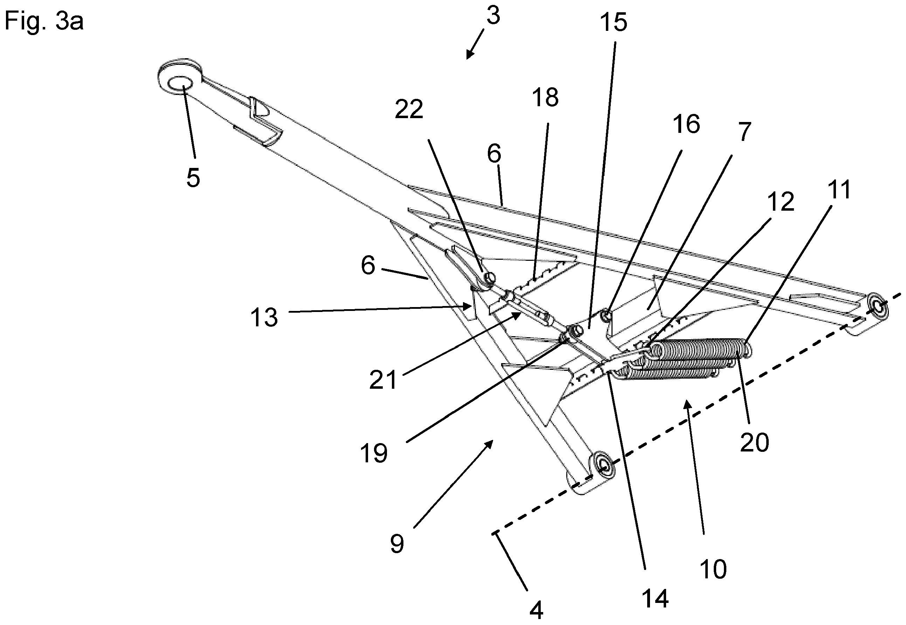

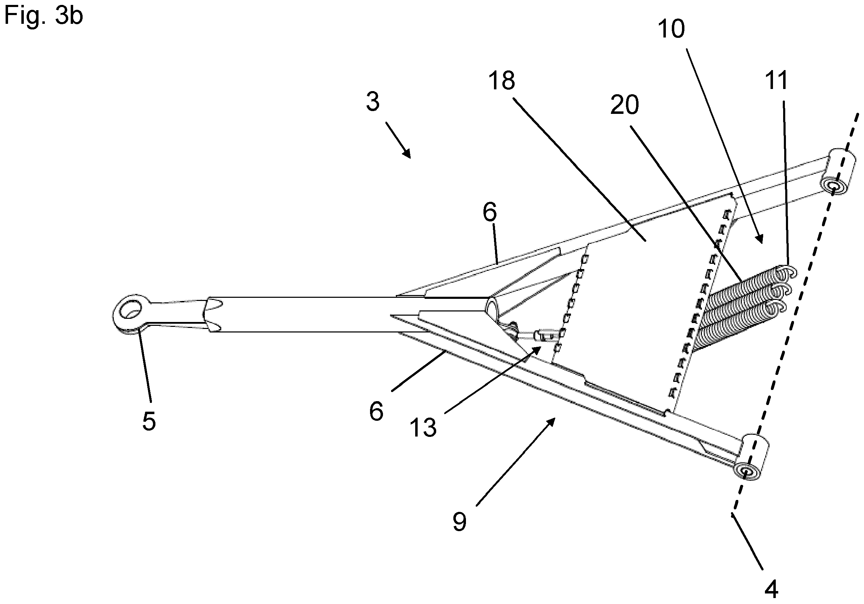

In den Figuren 3a bis 3b sind unterschiedliche Ansichten einer Zuggabel 3 mit einer ersten Ausführung der Einstellvorrichtung 13 gezeigt.

Wie dargestellt weist die Rückhaltevorrichtung 9 eine Federvorrichtung 10, welche wie dargestellt drei parallel wirkende Federn 20 aufweisen kann, mit einem ersten Ende 11 und einem zweiten Ende 12 auf, wobei die Federvorrichtung 10 mit dem ersten Ende 11 mit den Anschlagpunkten 8 des Fahrzeugrahmens 2 verbunden ist. Eine an der Zuggabel 3 angeordnete Einstellvorrichtung 13 weist Anschlagpunkte 14 auf, wobei die Federvorrichtung 10 mit dem zweiten Ende 12 mit den Anschlagpunkten 14 verbunden ist.

In der gezeigten Ausführung ist der Anschlagpunkt 14 jeweils an einem relativ zur Zuggabel 3 um ein Schwenklager 16 verschwenkbaren Hebel 15 der Einstellvorrichtung 13 ausgebildet. Der Hebel 15 ist in der Position relativ zur Zuggabel 3 durch ein Verschwenken einstellbar und festlegbar, wobei dies in der gezeigten Ausführung über das als ein selbsthemmendes Spannschloss ausgeführte Spannelement 21 erfolgen kann. Das an der Zuggabel 3 angeordnete und am Anschlagpunkt 22 angeschlagene Spannelement 21 weist dazu einen in seiner Position relativ zur Zuggabel 3 verstellbar ausgebildeten Anschlag 19 auf, mit welchem der verschwenkbare Hebel 15 verbunden ist. Eine Längenänderung des Spannelements 21 kann so in eine Schwenkbewegung des Hebels 15 übertragen werden.

Die Position des zumindest einen Anschlagpunkts 14 relativ zur Zuggabel 3 ist mit der gezeigten Ausführung der Einstellvorrichtung 13 der Rückhaltevorrichtung 9 unabhängig von der Schwenkstellung der Zuggabel 3 relativ zum Fahrzeugrahmen 2 einstellbar und festlegbar. Dies trifft auch für die in den Figuren 5a bis 5d und 6a bis 6d gezeigten Ausführungen zu.

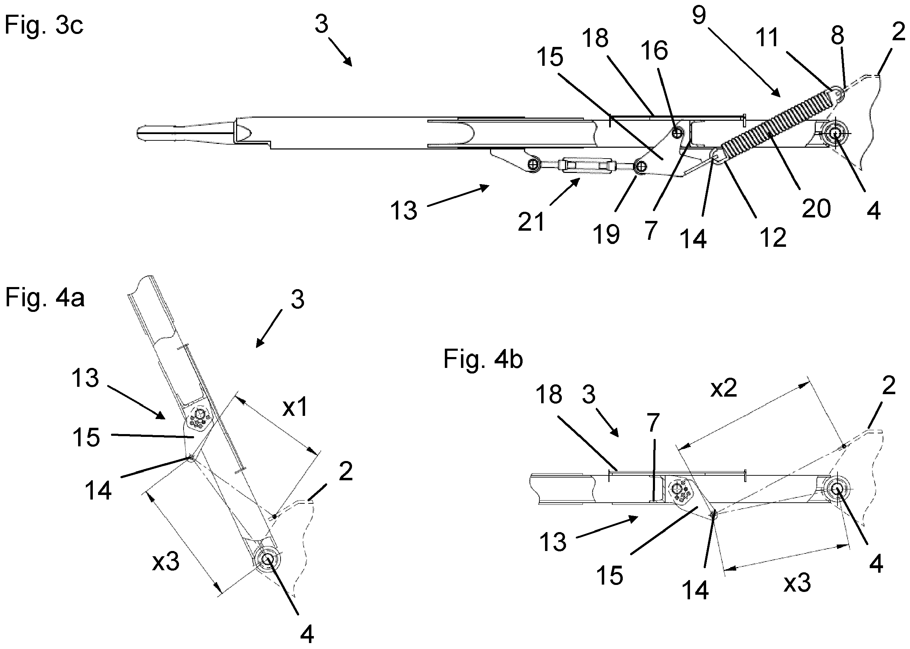

Insbesondere in den Figuren 3a und 3c ist erkennbar, dass die Einstellvorrichtung 13 zum Schutz von äußeren Einflüssen im Wesentlichen vollständig unterhalb der Zuggabel 3 angeordnet ist.

Bei einem Vergleich der Figuren 1a und 3c ist erkennbar, dass in Montagelage der Zuggabel 3 das erste Ende 11 der Federvorrichtung 10 oberhalb der Zuggabel 3 mit einem Anschlagpunkt 8 im Fahrzeugrahmen 2 verbindbar ist und das zweite Ende 12 der Federvorrichtung 10 unterhalb der Zuggabel 3 mit zumindest einem Anschlagpunkt 14 der Einstellvorrichtung 13 verbindbar ist.

Bei einem Vergleich der Figuren 1b und 3c ist erkennbar, dass die Zuggabel 3 in Y-Form mit zwei in Richtung des Fahrzeugrahmens 2 auseinanderlaufenden Schenkeln 6 ausgebildet ist, wobei zwischen den Schenkeln 6 eine Querstrebe 7 und ein Auftrittsblech 18 angeordnet ist und die Einstellvorrichtung 13 zum Schutz von äußeren Einflüssen im Wesentlichen vollständig unterhalb der Zuggabel 3 angeordnet ist.

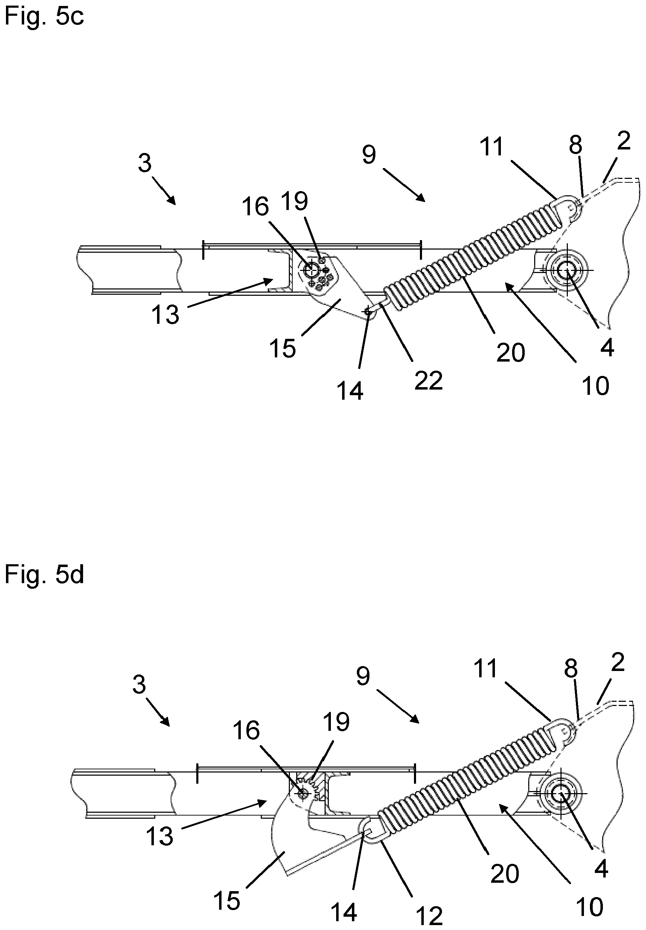

In den Figuren 4a und 4b sind Detailansichten einer Zuggabel 3 in unterschiedlichen Schwenkstellungen relativ zu einem Fahrzeugrahmen 2 gezeigt. Zu näheren Details der Einstellvorrichtung 13 sei auf die Figur 5c verwiesen.

In unterschiedliche Schwenkstellungen können sich unterschiedliche Abstände x1, x2 des zumindest einen verstellbar an der Zuggabel 3 angeordneten Anschlagpunkts 14 zu dem zumindest einen Anschlagpunkt 8 am Fahrzeugrahmen 2 ergeben. So kann etwa die Position des zumindest einen verstellbaren Anschlagpunkts 14 zum Beispiel im unbelasteten Zustand relativ zur Zuggabel eingestellt werden. Darauffolgend kann die Federvorrichtung 10 durch Hochschwenken der Zuggabel, wodurch sich der Abstand x2 auf x1 verkürzt, im ungespannten Zustand am Fahrzeugrahmen 2 und an der Einstellvorrichtung 13 angeschlagen werden. Die Zuggabel 3 kann auf Grund ihres Eigenmoments schließlich in die eingestellte Schwenkstellung, ähnlich einem Federpendel, zurückkehren.

Bei einer Schwenkbewegung der Zuggabel 3 relativ zum Fahrzeugrahmen 2 kann die mit der Einstellvorrichtung 13 eingestellte Position des zumindest einen Anschlagpunkts relativ zur Zuggabel 3, und damit ein eingestellter Abstand x3 des zumindest einen verstellbar an der Zuggabel angeordneten Anschlagpunkts 14 zur Schwenkachse 4 der schwenkbar am Fahrzeugrahmen 2 gelagerten Zuggabel 3, erhalten bleiben.

In den Figuren 5a bis 5d sind Seitenansichten einer Zuggabel 3 mit unterschiedlichen Ausführungen einer Einstellvorrichtung 13 gezeigt. Den Ausführungen ist gemeinsam, dass der Anschlagpunkt 14 an einem relativ zur Zuggabel 3 verschwenkbaren Hebel 15 ausgebildet ist. Mit der Einstellvorrichtung 13 kann jeweils eine Schwenkstellung des verschwenkbaren Hebels 15 relativ zur Zuggabel 4 einstellbar und festlegbar sein.

Allgemein kann mit der Einstellvorrichtung 13 eine Schwenkstellung des verschwenkbaren Hebels 15 durch eine wie in den Figuren 5b bis 5d gezeigte formschlüssige Verbindung oder eine wie in den Figuren 3c und 5a gezeigte kraftschlüssige Verbindung zwischen dem Hebel 15 und zumindest einem an der Zuggabel 3 ausgebildeten oder angeordneten Anschlag 19 einstellbar und festlegbar sein.

Figur 5a zeigt eine Ausführung der Einstellvorrichtung 13, bei welcher der zumindest eine an der Zuggabel 3 ausgebildete oder angeordnete Anschlag 19 in seiner Position relativ zu Zuggabel 3 durch eine Verstellschraube verstellbar und durch einen Kraftschluss über Reibkräfte festlegbar ausgebildet ist.

Eine formschlüssige Verbindung kann
- wie in Figur 5b dargestellt durch eine profilierte Öffnung im Hebel 15, beispielsweise eine Sechskantoder auch Zwölfkant-Aufnahme, in welche ein entsprechend profilierter, an der Zuggabel angeordneter Anschlag 19, beispielsweise ein Sechskant-Bolzen, eingreift,
- wie in Figur 5c dargestellt durch eine Verbolzung oder Verschraubung einer Öffnung des Hebels 15 mit einer als Anschlag 19 dienenden Öffnung in oder an der Zuggabel 4, oder
- wie in Figur 5d dargestellt durch eine am Hebel 15 ausgebildete Verzahnung, welche in einen Anschlag 19 mit entsprechender Verzahnung eingreift,
ausgebildet sein.

In den Figuren 6a bis 6d sind Seitenansichten einer Zuggabel 3 mit unterschiedlichen Ausführungen einer Einstellvorrichtung 13 gezeigt. Den Ausführungen ist gemeinsam, dass der Anschlagpunkt 14 an einem relativ zur Zuggabel 3 verfahrbaren Schlitten 17 der Einstellvorrichtung 13 ausgebildet ist. Mit der Einstellvorrichtung 13 kann jeweils eine Position des Schlittens relativ zur Zuggabel 3 einstellbar und festlegbar sein.

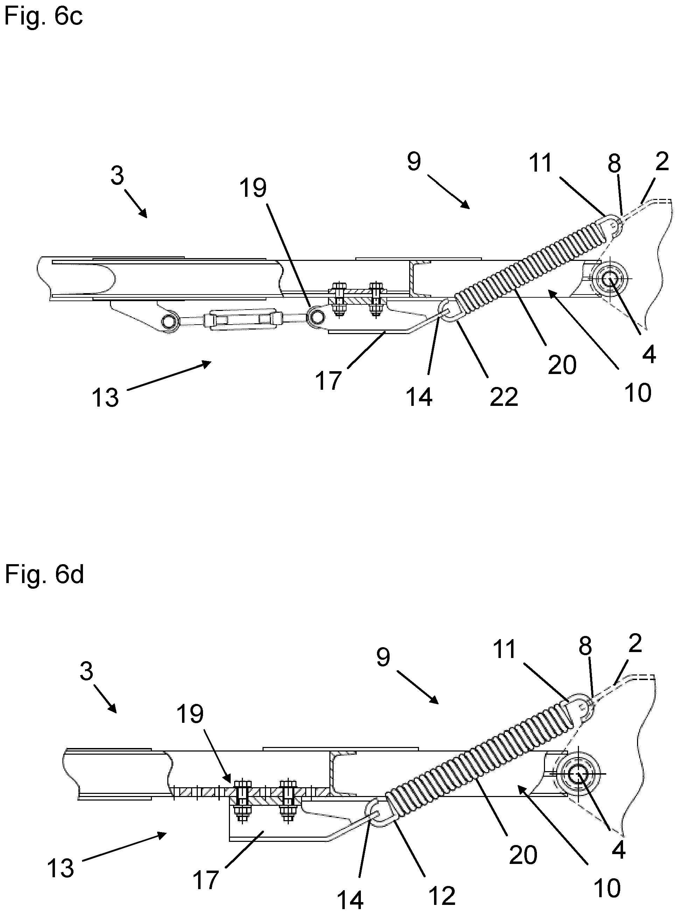

Allgemein kann mit der Einstellvorrichtung 13 eine Position des Schlittens relativ zur Zuggabel 3 durch eine wie in den Figuren 6a bis 6c gezeigte kraftschlüssige Verbindung oder eine wie in Figur 6d gezeigte formschlüssige Verbindung zwischen dem Schlitten 17 und zumindest einem an der Zuggabel 3 ausgebildeten oder angeordneten Anschlag 19 einstellbar und festlegbar sein.

Eine kraftschlüssige Verbindung kann beispielsweise durch
- eine wie in Figur 6a gezeigte Verschraubung des Schlittens 17 an einer als Anschlag 19 dienenden Öffnung in oder an der Zuggabel 3 zum Festklemmen des Schlittens 17,
- einen wie in Figur 6b gezeigten an der Zuggabel 3 angeordneten und in seiner Position relativ zur Zuggabel 3 verstellbaren Anschlag 19, welcher durch eine Verstellschraube ausgebildet ist und durch einen Kraftschluss über Reibkräfte festlegbar ist,
- eine wie in Figur 6c gezeigte Festlegung des Schlittens 17 an der Zuggabel 3 durch ein selbsthemmendes Spannelement 21 mit Anschlag 19, beispielsweise ein Spannschloss,
ausgebildet sein.

Eine formschlüssige Verbindung kann beispielsweise durch eine wie in Figur 6d gezeigte Verbolzung oder Verschraubung einer Öffnung des Schlittens 17 mit einer als Anschlag 19 dienenden Öffnung in oder an der Zuggabel 3 ausgebildet sein. Eine Verzahnung am Schlitten 17 und ein entsprechender Anschlag 19 mit einer Verzahnung an der Zuggabel 3 ist ebenso denkbar.

### Bezugszeichen

- 1: Anhänger
- 2: Fahrzeugrahmen
- 3: Zuggabel
- 4: Schwenkachse Zuggabel
- 5: Zugöse
- 6: Schenkel Zuggabel
- 7: Querstrebe
- 8: Anschlag Fahrzeugrahmen
- 9: Rückhaltevorrichtung
- 10: Federvorrichtung
- 11: erstes Ende
- 12: zweites Ende
- 13: Einstellvorrichtung
- 14: Anschlagpunkt Einstellvorrichtung
- 15: Hebel
- 16: Schwenklager Hebel
- 17: Schlitten
- 18: Auftrittsblech
- 19: Anschlag Zuggabel
- 20: Feder
- 21: Spannelement
- 22: Anschlagpunkt

## Patentansprüche

1. Anhänger (1) mit einem Fahrzeugrahmen (2) und einer schwenkbar an dem Fahrzeugrahmen (2) gelagerten Zuggabel (3), mit einer Rückhaltevorrichtung (9) für die Zuggabel (3), wobei mit der Rückhaltevorrichtung (9) zumindest eine Schwenkstellung der Zuggabel (3) relativ zum Fahrzeugrahmen (2) einstellbar ist, wobei die Rückhaltevorrichtung (9)
- zumindest eine Federvorrichtung (10) mit einem ersten Ende (11) und einem zweiten Ende (12) aufweist, wobei die Federvorrichtung (10) mit dem ersten Ende (11) mit dem Fahrzeugrahmen (2) verbindbar oder verbunden ist, und
- eine an der Zuggabel (3) angeordnete Einstellvorrichtung (13) mit zumindest einem Anschlagpunkt (14) aufweist, wobei die Federvorrichtung (10) mit dem zweiten Ende (12) mit dem zumindest einen Anschlagpunkt (14) verbindbar oder verbunden ist, wobei eine Position des zumindest einen Anschlagpunkts (14) relativ zur Zuggabel (3) verstellbar ist
**dadurch gekennzeichnet, dass** die Position des zumindest einen Anschlagpunkts (14) relativ zur Zuggabel (3) mit der Einstellvorrichtung (13) unabhängig von der Schwenkstellung der Zuggabel (3) relativ zum Fahrzeugrahmen (2) einstellbar und festlegbar ist.

2. Anhänger nach dem vorangehenden Anspruch, wobei der zumindest eine Anschlagpunkt (14) an einem relativ zur Zuggabel (3) verschwenkbaren Hebel (15) und/oder einem relativ zur Zuggabel (3) verfahrbaren Schlitten (17) der Einstellvorrichtung (13) ausgebildet ist und der Hebel (15) und/oder der Schlitten (17) in der Position relativ zur Zuggabel (3) einstellbar und festlegbar ist, wobei vorzugsweise der Hebel (15) und/oder der Schlitten (17) in der Position relativ zur Zuggabel (3) zumindest teilweise diskret und/oder kontinuierlich einstellbar und festlegbar ist.

3. Anhänger nach dem vorangehenden Anspruch, wobei mit der Einstellvorrichtung (13)
- eine Schwenkstellung des verschwenkbaren Hebels (15) relativ zur Zuggabel (3) und/oder
- eine Position des verfahrbaren Schlittens (17) entlang der Zuggabel (3) einstellbar und festlegbar ist.

4. Anhänger nach dem vorangehenden Anspruch, wobei mit der Einstellvorrichtung (13)
- eine Schwenkstellung des verschwenkbaren Hebels (15) durch eine formschlüssige und/oder kraftschlüssige Verbindung zwischen dem Hebel (15) und zumindest einem an der Zuggabel (3) ausgebildeten oder angeordneten Anschlag (19) einstellbar und festlegbar ist, und/oder
- eine Position des verfahrbaren Schlittens (17) durch eine formschlüssige und/oder kraftschlüssige Verbindung zwischen dem Schlitten (17) und zumindest einem an der Zuggabel (3) ausgebildeten oder angeordneten Anschlag (19) einstellbar und festlegbar ist.

5. Anhänger nach dem vorangehenden Anspruch, wobei der zumindest eine an der Zuggabel (3) ausgebildete oder angeordnete Anschlag (19) in seiner Position relativ zu Zuggabel (3) verstellbar ausgebildet ist.

6. Anhänger nach einem der vorangehenden Ansprüche, wobei in Montagelage der Zuggabel (3) die Einstellvorrichtung (13) im Wesentlichen vollständig unterhalb der Zuggabel (3) angeordnet ist.

7. Anhänger nach einem der vorangehenden Ansprüche, wobei in Montagelage der Zuggabel (3) das erste Ende (11) der Federvorrichtung (10) oberhalb der Zuggabel (3) mit dem Fahrzeugrahmen (2) verbindbar oder verbunden ist und das zweite Ende (12) der Federvorrichtung (10) unterhalb der Zuggabel (3) mit zumindest einem Anschlagpunkt (14) der Einstellvorrichtung (13) verbindbar oder verbunden ist.

8. Anhänger nach einem der vorangehenden Ansprüche, wobei Zuggabel (3) in V-Form oder in Y-Form mit zumindest zwei in Richtung des Fahrzeugrahmens (2) auseinanderlaufenden Schenkeln (6) ausgebildet ist, wobei zwischen den Schenkeln (6) eine Querstrebe (7) angeordnet ist, wobei die Einstellvorrichtung (13) im Wesentlichen vollständig unterhalb der Zuggabel (3) angeordnet ist.

9. Anhänger nach einem der vorangehenden Ansprüche, wobei die Federvorrichtung (10) eine einzelne oder mehrere parallel und/oder seriell wirkende Federn (20) aufweist.

10. Anhänger nach dem vorangehenden Anspruch, wobei die Federn (20) als schraubenförmige Zugfedern und/oder als Gasfedern ausgeführt sein können.
